# EUROPEAN PATENT SPECIFICATION

(11) **EP 3 546 190 B1**
(45) Date of publication and mention of the grant of the patent: **21.06.2023**
(21) Application number: 19163929.3
(22) Date of filing: 20.03.2019
(51) Int. Cl.: B29C 45/83, B29C 45/68, B29C 45/66, B29C 45/17

(54) **INJECTION MOLDING MACHINE**
SPRITZGIESSMASCHINE
MACHINE DE MOULAGE À INJECTION

(30) Priority: 30.03.2018 JP 2018068367
(43) Date of publication of application: 02.10.2019
(73) Proprietor: Sumitomo Heavy Industries, Ltd., Tokyo 141-6025 (JP)
(72) Inventor: MOROZUMI, Tomohito, Chiba-shi, Chiba, 263-0001, (JP); KOBAYASHI, Akihisa, Chiba-shi, Chiba, 263-0001, (JP); TANAKA, Yoshitada, Chiba-shi, Chiba, 263-0001, (JP); ITO, Yosuke, Chiba-shi, Chiba, 263-0001, (JP)
(74) Representative: Louis Pöhlau Lohrentz

(56) References cited:
- CN-U- 205 800 023
- DE-B3-102016 119 583
- JP-A- H09 262 884
- JP-A- 2010 234 433
- JP-A- 2012 111 197

## Description

### BACKGROUND OF THE INVENTION

### Field of the Invention

The present invention relates to an injection molding machine.

### Description of Related Art

An injection molding machine is known, in which a stationary platen is fixed to a frame, the stationary platen and a toggle support are connected to each other with a gap therebetween by a tie bar disposed to be parallel in mold opening and closing directions, and a leg portion of the toggle support is placed to be movable on the frame in the mold opening and closing directions (Japanese Unexamined Patent Publication No. 2014-54748). In the injection molding machine having the above-described configuration, when a mold is clamped, the tie bar extends according to a mold clamping force. Accordingly, the leg portion of the toggle support slides on the frame in the mold opening and closing directions. Japanese Patent Publication No. 2010-234433 discloses a cooling mechanism for a machine base sliding part in a mold clamping device. Japanese Patent Publication No. 2012-111197 discloses an injection molding machine in which a grease receiving plate member can be tilted. Japanese Patent Publication No. 1996-262884 discloses an injection molding machine composed of a fixed platen, a movable platen and a clamping housing. Chinese Patent Publication CN205800023U discloses a self-recovering lubricating oil supporting mechanism.

### SUMMARY OF THE INVENTION

Meanwhile, in a case where a lubricant is supplied to sliding surfaces of the toggle support and the frame, the lubricant flowing out from the sliding surfaces is collected below the leg portion of the toggle support. Accordingly, in the injection molding machine of the related art, scattering or sagging of the lubricant is caused by forward or rearward movement of the toggle support in the mold opening and closing directions, and there is a concern that the injection molding machine is contaminated by the lubricant.

Therefore, an object of the present invention is to provide an injection molding machine which prevents contamination of the machine caused by the lubricant.

According to an aspect of an embodiment, there is provided an injection molding machine including: a stationary platen which is fixed to a frame; a toggle support which is connected to the stationary platen via a tie bar and is placed on the frame; a toggle mechanism which is supported by the toggle support; a supply portion which supplies a lubricant to a lubrication portion formed between a bottom surface of a leg portion of at least one of the toggle support and the stationary platen and a placement surface of the frame; a collection portion which collects the lubricant from the lubrication portion; and an enclosure which surrounds the lubrication portion, in which the collection portion has a gathering portion which gathers the lubricant flowing out from the lubrication portion, and a portion between the leg portion and the enclosure is set to the gathering portion.

According to the present invention, it is possible to provide the injection molding machine which prevents contamination of the machine caused by the lubricant.

### BRIEF DESCRIPTION OF THE DRAWINGS

Fig. 1 is a view showing a state when a mold opening of an injection molding machine according to a first embodiment is completed.
Fig. 2 is a view showing a state when a mold of the injection molding machine according to the first embodiment is clamped.
Fig. 3 is a perspective view showing a periphery of a toggle support of the injection molding machine according to the first embodiment.
Fig. 4 is a partially enlarged perspective view showing a periphery of a leg portion of the toggle support of the injection molding machine according to the first embodiment.
Fig. 5 is a perspective view showing the leg portion of the toggle support.
Fig. 6 is a perspective view showing a gathering block.
Fig. 7 is a sectional view showing the periphery of the leg portion of the toggle support of the injection molding machine according to the first embodiment.
Fig. 8 is a partially enlarged perspective view showing a periphery of a leg portion of a toggle support of an injection molding machine according to a second embodiment.
Fig. 9 is a partially enlarged perspective view showing a periphery of a leg portion of a toggle support of an injection molding machine according to a third embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### <<First Embodiment>>

### (Injection Molding Machine)

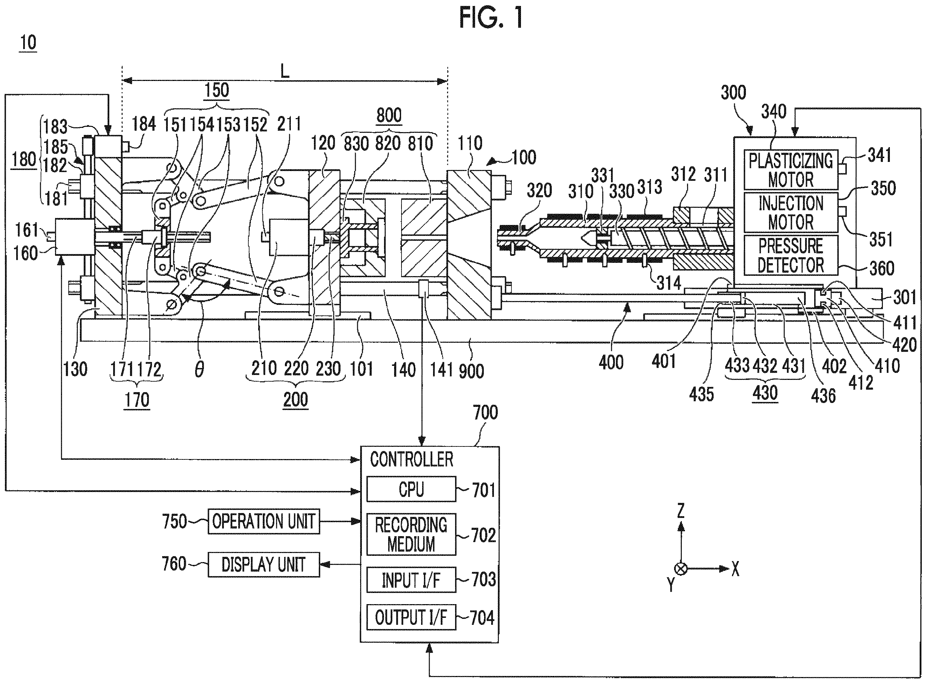

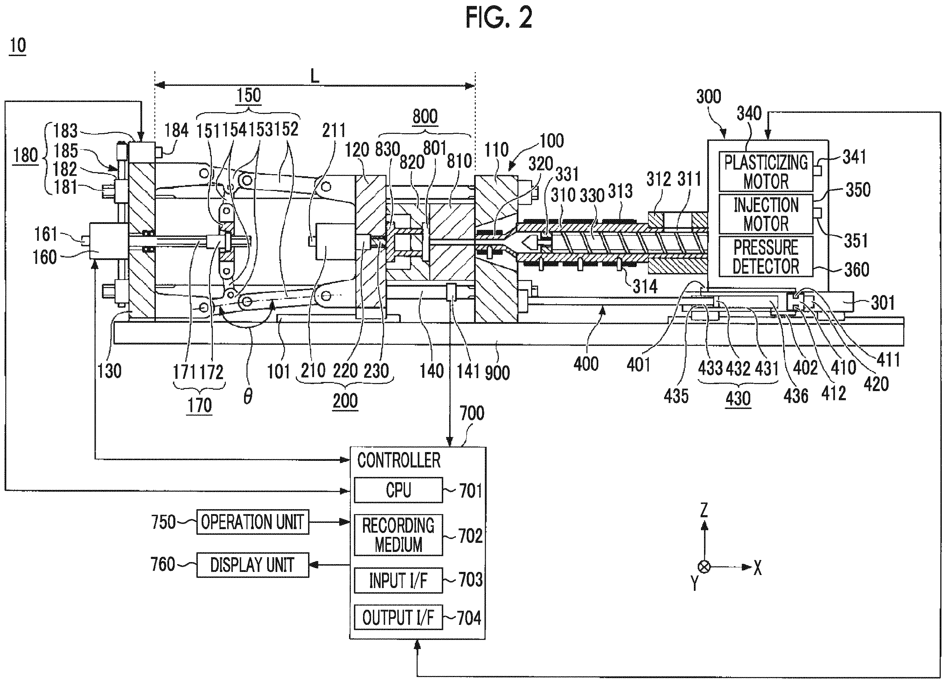

Fig. 1 is a view showing a state when a mold opening of an injection molding machine according to a first embodiment is completed. Fig. 2 is a view showing a state when a mold of the injection molding machine according to the first embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a controller 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (forexample, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position . In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motor 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the controller 700. The pressure detector 360 is provided on a transmission path of the force between the injection motor 350 and the screw 330 and detects the force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the mold closing cycle may be performed at an initial stage of the molding cycle. In addition, the filling process may start during the mold closing process. Moreover, the ejection process may be started during the mold opening process. In a case where an on/off valve which opens and closes the flow path of the nozzle 320 is provided, the mold opening process may be started during the plasticizing process. Accordingly, even when the mold opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### <Lubrication Structure in Leg portion of Toggle Support>

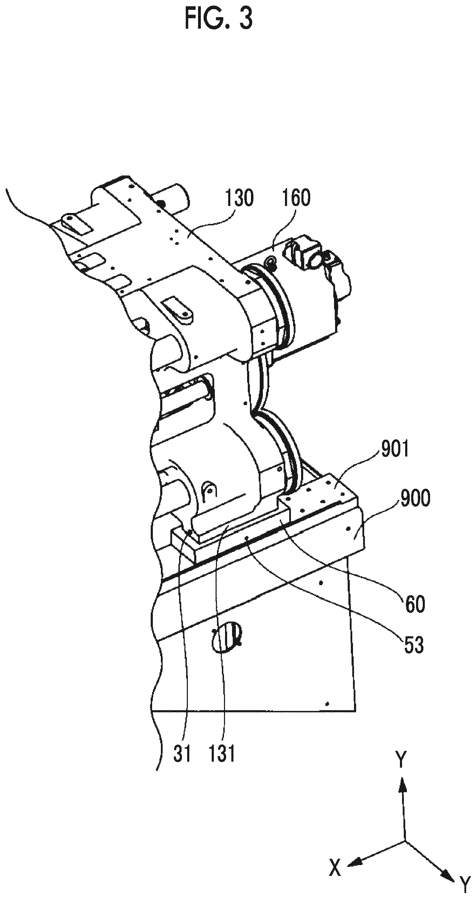

Next, a lubrication structure between a leg portion 131 of the toggle support 130 and the frame 900 will be described with reference to Fig. 3. Fig. 3 is a perspective view showing a periphery of the toggle support 130 of the injection molding machine 10 according to the first embodiment.

As described above, the stationary platen 110 is fixed to the frame 900. The toggle support 130 is connected to the stationary platen 110 via the tie bars 140 disposed in parallel in the mold opening and closing directions. In addition, as shown in Fig. 3, the leg portion 131 of the toggle support 130 is placed on a placement surface 901 of the frame 900 so as to be movable in the mold opening and closing directions.

Here, if the mold clamping force is generated by the toggle mechanism 150, the tie bar 140 extends according to the mold clamping force, and thus, the toggle support 130 moves rearward. Moreover, if the mold clamping force is released by the toggle mechanism 150, the extension of the tie bar 140 is restored, and thus, the toggle support 130 moves forward. Accordingly, the leg portion 131 of the toggle support 130 moves forward or rearward and slides on the placement surface 901 of the frame 900 in the mold opening and closing directions (X direction). In addition, a bottom surface of the leg portion 131 of the toggle support 130 and the placement surface 901 of the frame 900 become sliding surfaces. The injection molding machine 10 according to the first embodiment includes the lubrication structure which lubricates the sliding surfaces of the leg portion 131 of the toggle support 130 and the frame 900.

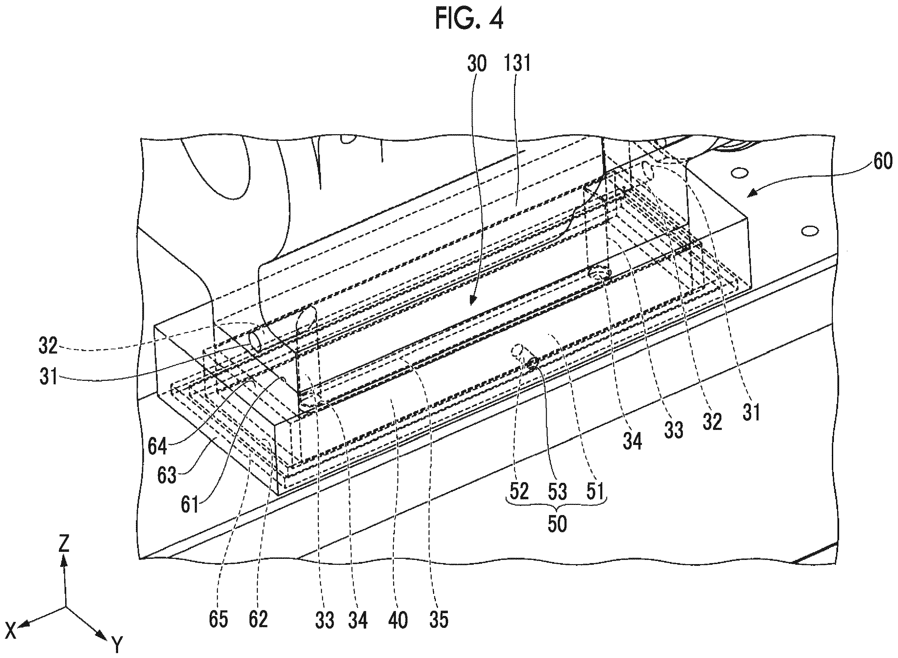

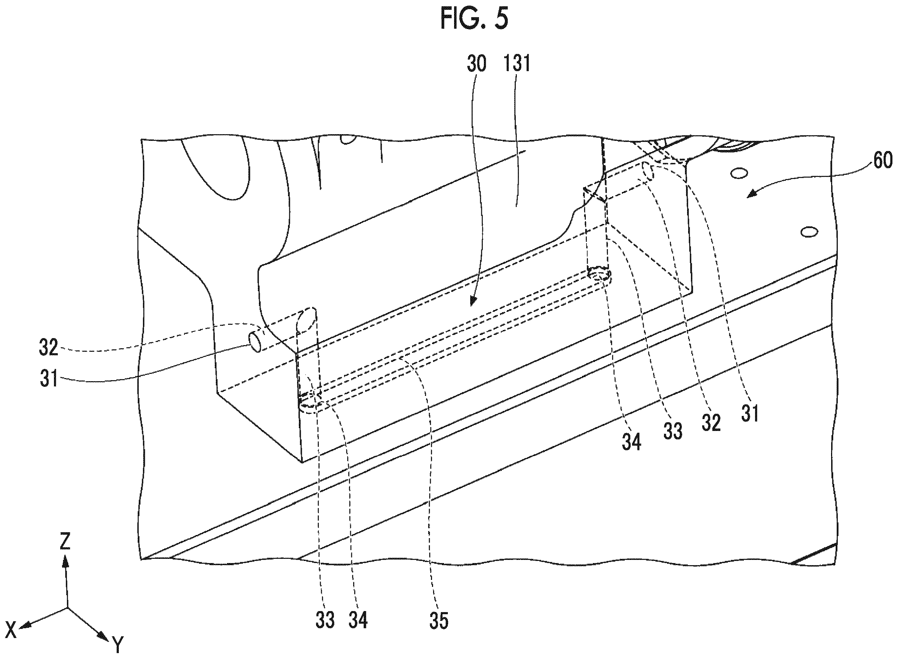

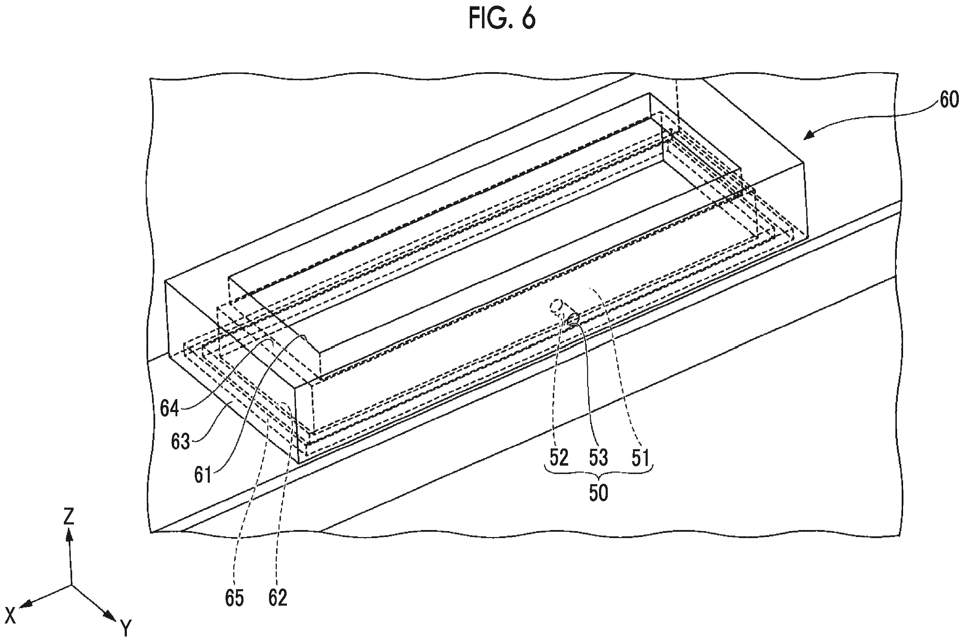

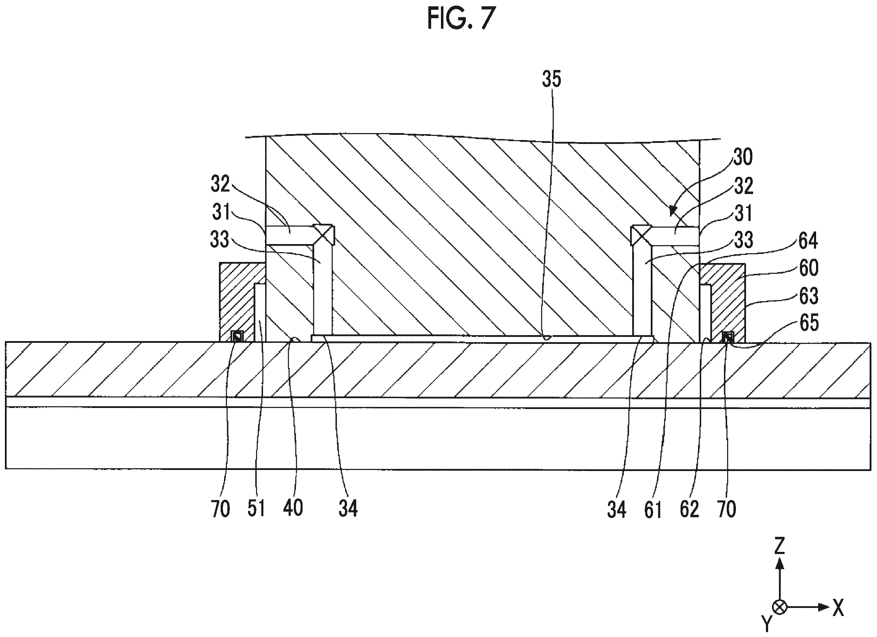

The lubrication structure between the leg portion 131 and the frame 900 will be further described with reference to Figs. 4 to 7. Fig. 4 is a partially enlarged perspective view showing a periphery of the leg portion 131 of the toggle support 130 of the injection molding machine 10 according to the first embodiment. Fig. 5 is a perspective view showing the leg portion 131 of the toggle support 130. Fig. 6 is a perspective view showing a gathering block 60. Fig. 7 is a sectional view showing the periphery of the leg portion 131 of the toggle support 130 of the injection molding machine 10 according to the first embodiment. In addition, in Fig. 4, spaces or flow paths formed inside are shown by dotted lines. Moreover, in Figs. 4 and 6, seal members 70 shown in Fig. 7 are not shown.

The lubrication structure between the toggle support 130 and the frame 900 includes a supply portion 30 which supplies the lubricant to a lubrication portion 40 between a bottom surface of the leg portion 131 of the toggle support 130 and the placement surface 901 of the frame 900 and a collection portion 50 which collects the lubricant.

The supply portion 30 is formed in the leg portion 131 and includes supply path connection ports 31, first supply paths 32, second supply paths 33, supply path opening portions 34, and concave groove portions 35.

The supply path connection port 31 is provided on each side surface of the leg portion 131 of the toggle support 130, and the first supply path 32 extending in the horizontal direction from the supply path connection port 31 is provided on each side surface. The second supply path 33 extending in the vertical direction from the other end side of the first supply path 32 is provided, and the other end side of the second supply path 33 is open at the supply path opening portion 34 provided on the bottom surface of the leg portion 131. In addition, two supply path connection ports 31, two first supply paths 32, two second supply paths 33, and two supply path opening portions 34 are provided.

Each of the two supply path opening portions 34 is provided at an approximate center of the bottom surface of the leg portion 131 in a width direction (Y direction) of the injection molding machine 10, and the two supply path opening portions 34 are provided to be separated from each other on sides opposite to each other in the mold opening and closing directions (X direction) from the center of the bottom surface of the leg portion 131. Moreover, the concave groove portion 35 communicating with the two supply path opening portions 34 is provided on the bottom surface of the leg portion 131.

The collection portion 50 is formed by disposing the gathering block 60 in the leg portion 131 and includes a gathering portion 51, a collection path 52, and a collection path connection port 53.

Here, the gathering block 60 has a through-hole portion penetrating from an upper surface-side opening portion 61 to a lower surface-side opening portion 62, and the leg portion 131 of the toggle support 130 is inserted and disposed in the through-hole portion. In addition, the gathering block 60 has an enclosure 63 which surrounds the side surfaces of the leg portion 131 and a rectangular annular constriction portion 64 which is narrowed toward the side surfaces of the leg portion 131 on an upper surface side of the gathering block 60. That is, an opening area of the upper surface-side opening portion 61 on the constriction portion 64 side is smaller than an opening area of the lower surface-side opening portion 62 on the enclosure 63 side. In addition, a rectangular annular seal groove 65 is formed on a bottom surface of the enclosure 63 so as to surround the lower surface-side opening portion 62. A seal member 70 is disposed in the seal groove 65 of the gathering block 60 and seals a gap between the bottom surface of the gathering block 60 and the placement surface 901 of the frame 900.

Here, the lower surface-side opening portion 62 is formed to be larger than the bottom surface of the leg portion 131, and thus, the rectangular annular gathering portion 51 which is an internal space is formed between the enclosure 63 and the leg portion 131. The gathering portion 51 is formed to communicate with an end portion of the lubrication portion 40, and is configured such that the lubricant flowing out from the lubrication portion 40 can flow into the gathering portion 51. Moreover, the gap between the bottom surface of the enclosure 63 of the gathering block 60 and the placement surface 901 of the frame 900 is sealed by the seal member 70 disposed in the seal groove 65, and thus, the lubricant flowing into the gathering portion 51 does not leak out from the gap to the outer space. Accordingly, the gathering portion 51 can store the lubricant flowing out from the lubrication portion 40. Moreover, the constriction portion 64 is formed on the upper side of the enclosure 63, and thus, the lubricant stored in the gathering portion 51 is not easily scattered to the outer space.

The collection path 52 penetrating from the inside of the enclosure 63 to the outside thereof is provided in the enclosure 63 of the gathering block 60, and the collection path connection port 53 is provided on an outer peripheral surface side of the enclosure 63. The gathering portion 51 which is the internal space of the gathering block 60 communicates with the collection path connection port 53 via the collection path 52.

Moreover, the lubricant is supplied to each supply path connection port 31 via a pipe (not shown) . In addition, a pipe (not shown) is connected to the collection path connection port 53, and thus, the lubricant can be recovered by a collection tank (not shown) . In addition, the collection of the lubricant may be performed by collecting the lubricant naturally flowing or may be performed by sucking and collecting the lubricant by a suction pump (not shown).

The leg portion 131 and the gathering block 60 may be fixed to each other by fixing means (not shown) such as a bolt. The gathering block 60 is fixed to the leg portion 131, and thus, the gathering block 60 moves forward or rearward according to the forward or rearward movement of the leg portion 131. Moreover, the gathering block 60 is prevented from floating up, and thus, it is possible to reliably perform the sealing by the seal member 70.

In addition, the leg portion 131 and the gathering block 60 may not be fixed to each other. Since the constriction portion 64 is formed on the upper surface side of the gathering block 60, and thus, even when the leg portion 131 of the toggle support 130 moves forward or rearward, the leg portion 131 of the toggle support 130 moves forward or rearward without closing the gathering portion 51, and the gathering block 60 also moves forward or rearward. In addition, the gathering block 60 may be prevented from floating up due to the weight of the gathering block 60 such that the sealing by the seal member 70 is reliably performed.

In addition, in the example shown in Figs. 3 to 7, the supply path connection ports 31 are provided above the upper surface of the gathering block 60. However, the present invention is not limited to this configuration. For example, each of the supply path connection ports 31 may be provided below the upper surface of the gathering block 60, and a pipe connected to the supply path connection port 31 may pass through a pipe hole provided on the side surface of the gathering block 60 so as to be connected to the supply path connection port 31. In a case of this configuration, it is preferable to seal a gap between an inner peripheral surface for the pipe hole of the gathering block 60 and an outer peripheral surface of the pipe.

### <Flow of Lubricant>

Next, a flow of the lubricant will be described. The lubricant supplied from the two supply path connection ports 31 is supplied from the supply path opening portions 34 to the lubrication portion 40 via the first supply paths 32 and the second supply paths 33. Here, the concave groove portion 35 extending in the mold opening and closing direction is formed on the bottom surface of the leg portion 131, and thus, the lubricant can spread around the center of the bottom surface of the leg portion 131 in the mold opening and closing directions . Accordingly, the lubricant supplied to the lubrication portion 40 flows from the center side of the leg portion 131 toward the outside of the leg portion 131. Therefore, the entire sliding surface is lubricated.

In addition, the lubricant lubricating the sliding surface flows to the outside from an end of the lubrication portion 40. Here, since the gathering block 60 is disposed in the leg portion 131, the lubricant flowing out from the lubrication portion 40 flows into the gathering portion 51 surrounded by the enclosure 63 and is stored. In addition, the sealing is performed by the seal member 70, and thus, the lubricant does not leak from the gap between the gathering block 60 and the frame 900. Moreover, if a liquid surface height of the lubricant stored in the gathering portion 51 reaches a set height of the collection path 52, the lubricant flows into the collection path 52 and flows to the pipe connected to the collection path connection port 53.

In addition, the leg portion 131 of the toggle support 130 moves on the placement surface 901 of the frame 900 in the mold opening and closing direction by generating or releasing the mold clamping force. However, the gathering block 60 also moves together with the leg portion 131. Moreover, the seal member 70 disposed in the seal groove 65 also moves together with the gathering block 60, and thus, sealing in the gap of the lower side of the gathering portion 51 is maintained, and the leakage of the lubricant is prevented. In addition, the gap between the upper surface-side opening portion 61 of the gathering block 60 and the side surface of the leg portion 131 is narrowed by the constriction portion 64 of the gathering block 60, and thus, the upper side of the gathering portion 51 prevents the scattering of the lubricant to the outer space.

Hereinbefore, according to the injection molding machine 10 of the first embodiment, in the lubrication structure which lubricates the sliding surfaces of the leg portion 131 of the toggle support 130 and the frame 900, the supply portion 30 which supplies the lubricant and the collection portion 50 which collects the lubricant are provided. Accordingly, it is possible to lubricate the lubrication portion 40 and collect the lubricant, and thus, it is possible to prevent scattering or sagging of the lubricant, and cleaning and maintenance properties of the injection molding machine 10 are improved. Moreover, it is possible to prevent the scattered lubricant from adhering to the molding product.

Moreover, the lubricant can be collected by the collection portion 50, and thus, it is possible to reuse the lubricant and it is possible to reduce a running cost. In addition, the collected lubricant may be returned to a supply side, or a tank for storing the collected lubricant may be provided so as to reuse the collected lubricant for other applications.

### <<Second Embodiment>>

Next, an injection molding machine according to a second embodiment will be described. Compared to the injection molding machine according to the first embodiment, in the injection molding machine according to the second embodiment, a lubrication structure between the leg portion 131 of the toggle support 130 and the frame 900 is different. Other configurations are similar to each other, and thus, overlapping descriptions thereof are omitted.

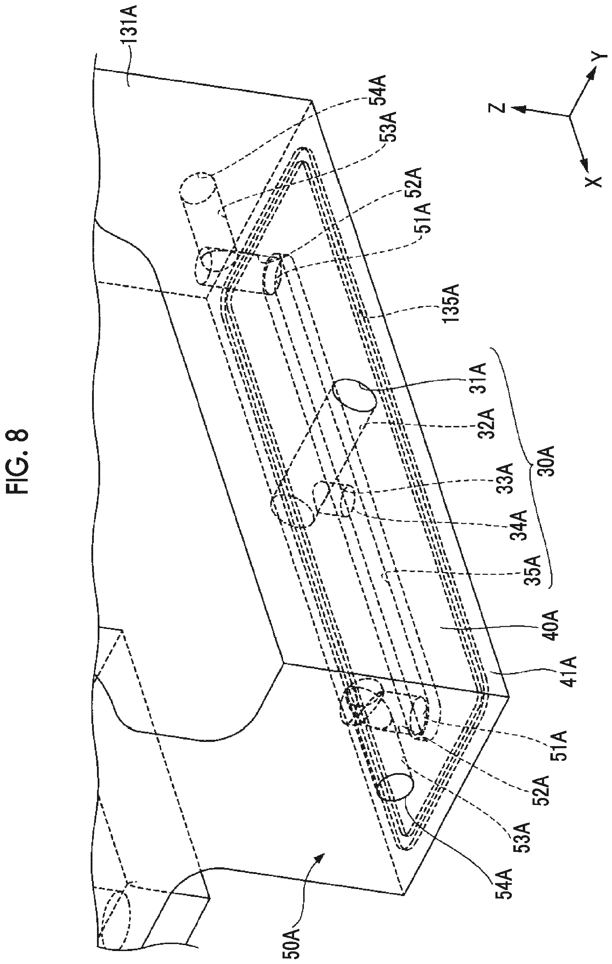

A lubrication structure between the leg portion 131A and the frame 900 of the injection molding machine according to the second embodiment will be described with reference to Fig. 8. Fig. 8 is a partially enlarged perspective view showing a periphery of the leg portion 131A of the toggle support 130 of the injection molding machine according to the second embodiment. In addition, in Fig. 8, an internal shape is indicated by hidden lines (dotted lines) . Moreover, in Fig. 8, a seal member described later is not shown.

The lubrication structure between the leg portion 131A and the frame 900 has a supply portion 30A supplies the lubricant to a lubrication portion 40A between a bottom surface of the leg portion 131A and the placement surface 901 of the frame 900 and a collection portion 50A which collects the lubricant.

The supply portion 30A is formed in the leg portion 131A and includes a supply path connection port 31A, a first supply path 32A, a second supply path 33A, a supply path opening portion 34A, and a concave groove portion 35A.

Here, the supply portion 30A of the second embodiment shown in Fig. 8 is configured to supply the lubricant from one supply path opening portion 34A provided at an approximate center of a bottom surface of the leg portion 131A while the supply portion 30 of the first embodiment shown in Fig. 4 is configured to supply the lubricant from the two supply path opening portions 34 separated from each other in the mold opening and closing directions. In addition, the concave groove portion 35A communicating with the supply path opening portion 34A is formed on the bottom surface of the leg portion 131A. The concave groove portion 35A is provided at an approximate center of the bottom surface of the leg portion 131A in the width direction (Y direction), and is provided to extend from the approximate center of the bottom surface of the leg portion 131A toward both outer sides in the mold opening and closing directions (X direction).

The collection portion 50A is formed in the leg portion 131A, and includes collection path opening portions 51A, first collection paths 52A, second collection paths 53A, and collection path connection ports 54A.

Here, each collection path opening portion 51A is provided on the bottom surface of the leg portion 131A, and the first collection path 52A extending in the vertical direction from the collection path opening portion 51A is provided. The second collection path 53A extending in the horizontal direction from the other end side of the first collection path 52A is provided, and the other end side of the second collection path 53A becomes the collection path connection port 54A provided on the side surface of the leg portion 131A. In addition, two collection path opening portions 51A, two first collection paths 52A, two second collection paths 53A, and two collection path connection ports 54A are provided.

Each of the two collection path opening portions 51A is provided at the approximate center of the bottom surface of the leg portion 131A in a width direction (Y direction), and the two collection path opening portions 51A are provided to be separated from each other on sides opposite to each other in the mold opening and closing directions (X direction) from the center of the bottom surface of the leg portion 131A. That is, one collection path opening portion 51A, the supply path opening portion 34A, and the other collection path opening portion 51A are formed on the bottom surface of the leg portion 131A in this order in the mold opening and closing directions (X direction), and the concave groove portion 35A is provided so as to communicate with the opening portions.

In addition, a rectangular annular seal groove 135A is formed on the bottom surface of the leg portion 131A so as to surround the supply path opening portion 34A, the collection path opening portions 51A, and the concave groove portion 35A. A seal member (not shown) is disposed in the seal groove 135A of the leg portion 131A and seals a gap between the bottom surface of the leg portion 131A and the placement surface 901 of the frame 900. Here, in the bottom surface of the leg portion 131A, the inside of a region surrounded by the seal groove 135A becomes the lubrication portion 40A. Meanwhile, in the bottom surface of the leg portion 131A, the outside of the region surrounded by the seal groove 135A becomes the non-lubrication portion 41A.

### <Flow of Lubricant>

Next, a flow of the lubricant will be described. The lubricant supplied from the supply path connection port 31A flows from the supply path opening portion 34A to the concave groove portion 35A via the first supply path 32A and the second supply path 33A, and lubricates the lubrication portion 40A which is the inside of a region surrounded by the seal member disposed in the seal groove 135A. Moreover, the concave groove portion 35A extending in the mold opening and closing direction is formed on the bottom surface of the leg portion 131A, and thus, the lubricant easily spreads to both outer sides of the bottom surface of the leg portion 131A in the mold opening and closing directions.

Here, the lubricant supplied to the lubrication portion 40A relatively flows toward the outer side in the mold opening and closing directions by a forward or rearward movement of the leg portion 131A. In addition, the lubricant is collected from the collection path opening portions 51A provided on both outer sides in the mold opening and closing directions. Moreover, sealing is performed by the seal member disposed in the seal groove 135A, and thus, the lubricant does not leak from the gap between the leg portion 131A and the frame 900.

Hereinbefore, according to the injection molding machine of the second embodiment, in the lubrication structure which lubricates the sliding surfaces of the leg portion 131A of the toggle support 130 and the frame 900, the supply portion 30A which supplies the lubricant and the collection portion 50A which collects the lubricant are provided. Accordingly, it is possible to lubricate the lubrication portion 40A and collect the lubricant, and thus, it is possible to prevent scattering or sagging of the lubricant, and cleaning and maintenance properties of the injection molding machine are improved. Moreover, it is possible to prevent the scattered lubricant from adhering to the molding product. In addition, the lubricant can be collected by the collection portion 50A, and thus, it is possible to reuse the lubricant and it is possible to reduce a running cost.

Here, the lubricant is not supplied to the non-lubrication portion 41A outside the seal groove 135 of the bottom surface of the leg portion 131A by the supply portion 30A. Accordingly, a height of the bottom surface of the leg portion 131A which becomes the non-lubrication portion 41A may be higher than a height of the bottom surface of the leg portion 131A which becomes the lubrication portion 40A such that the bottom surface of the leg portion 131A and the placement surface 901 of the frame 900 do not slide on the non-lubrication portion 41A.

Moreover, in the configuration shown in Fig. 8, the lubricant is supplied from the inner-side opening portion (supply path opening portion 34A) and is collected from both outer-side opening portions (collection path opening portions 51A) in the mold opening and closing directions. However, the present invention is not limited to this. In a modification example of the second embodiment, the lubricant may be supplied from both outer-side opening portions (corresponding to the collection path opening portions 51A) and may be collected from the inner-side opening portion (corresponding to the supply path opening portion 34A) . However, in the lubrication structure of the modification example of the second embodiment in which the lubricant is supplied from the outside and collected on the inside, there is a concern that the lubricant supplied from both outer-side opening portions stays in the vicinity of the seal member further outward than both outer-side opening portions. Since foreign matters such as abrasion powder and dust are mixed in the staying lubricant, the seal member maybe damaged by the foreign matter, and a lifespan of the seal member may decrease. Further, as compared with the lubrication structure of the modification example of the second embodiment in which the lubricant is supplied from the outside and collected on the inside, in the lubrication structure of the second embodiment shown in Fig. 8 in which the lubricant is supplied from the inside and collected on the outside, the lubricant can flow from the supply path opening portion 34A toward the collection path opening portions 51A by the forward or rearward movement of the leg portion 131A, which is preferable.

### <<Third Embodiment, not according to the invention>>

Next, an injection molding machine according to a third embodiment will be described. Compared to the injection molding machine according to the first embodiment, in the injection molding machine according to the third embodiment, a lubrication structure between the leg portion 131 of the toggle support 130 and the frame 900 is different. Other configurations are similar to each other, and thus, overlapping descriptions thereof are omitted.

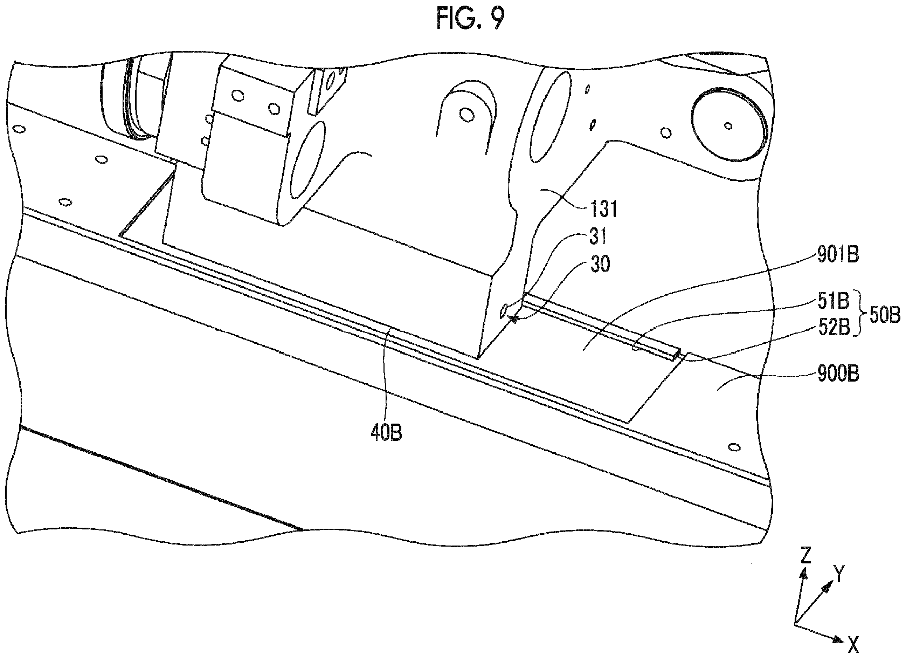

A lubrication structure between the leg portion 131 and a frame 900B according to the third embodiment will be described with reference to Fig. 9. Fig. 9 is a partially enlarged perspective view showing a periphery of the leg portion 131 of the toggle support 130 of the injection molding machine according to the third embodiment. In addition, in Fig. 9, an internal shape is indicated by a hidden line (a dotted line).

The lubrication structure between the leg portion 131 and the frame 900B has the supply portion 30 supplies the lubricant to a lubrication portion 40B between the bottom surface of the leg portion 131 and a placement surface 901B of the frame 900B and a collection portion 50B which collects the lubricant.

The supply portion 30 of the third embodiment has a configuration similar to that of the supply portion 30 of the first embodiment shown in Fig. 4, is formed in the leg portion 131, and as shown in Fig. 4, includes the supply path connection ports 31, the first supply paths 32, the second supply paths 33, the supply path opening portions 34, and the concave groove portions 35.

Meanwhile, the collection portion 50B of the third embodiment is formed in the frame 900B, and includes a lower portion 51B and a collection groove 52B.

Here, the lower portion 51B which is lower than the periphery is formed on an upper surface of the frame 900B, and a bottom surface of the lower portion 51B becomes the placement surface 901B on which the leg portion 131 is placed. In addition, the lower portion 51B is formed to be larger than a maximum range in which the leg portion 131 moves forward or rearward. Moreover, the collection groove 52B communicating with the lower portion 51B is provided.

### <Flow of Lubricant>

Next, a flow of the lubricant will be described. The lubricant supplied from the supply path connection ports 31 is supplied from the supply path opening portions 34 to the lubrication portion 40B via the first supply paths 32 and the second supply paths 33. Here, the concave groove portion 35 extending in the mold opening and closing direction is formed on the bottom surface of the leg portion 131, and thus, the lubricant can spread around the center of the bottom surface of the leg portion 131 in the mold opening and closing directions . Accordingly, the lubricant supplied to the lubrication portion 40B flows from the center side of the leg portion 131 toward the outside of the leg portion 131. Therefore, the entire sliding surface is lubricated.

In addition, the lubricant lubricating the sliding surface flows to the outside from an end of the lubrication portion 40B. Here, the bottom surface of the lower portion 51B is the placement surface 901B, and thus, the lubricant flowing out from the lubrication portion 40B flows into the internal space of the lower portion 51B such that the lubricant is prevented from spreading outward from the lower portion 51B. Moreover, the lubricant is discharged from the collection groove 52B communicating with the lower portion 51B. In addition, an oil pan (not shown) is installed at an end of the collection groove 52B such that the lubricant can be collected.

Hereinbefore, according to the injection molding machine of the third embodiment, in the lubrication structure which lubricates the sliding surfaces of the leg portion 131 of the toggle support 130 and the frame 900B, the supply portion 30 which supplies the lubricant and the collection portion 50B which collects the lubricant are provided. Accordingly, it is possible to lubricate the lubrication portion 40B and collect the lubricant through the collection groove 52B by restricting the movement of the lubricant after the lubricant lubricates the lubrication portion 40B, and thus, it is possible to prevent the scattering or sagging of the lubricant, and the cleaning and maintenance properties of the injection molding machine are improved. Moreover, it is possible to prevent the scattered lubricant from adhering to the molding product. In addition, the lubricant can be collected by the collection portion 50B, and thus, it is possible to reuse the lubricant and it is possible to reduce a running cost.

Hereinbefore, although the embodiments of the injection molding machine or the like are described, the present invention is not limited to the above-described embodiments or the like, and various modifications and improvements can be made within the scope of the present invention described in claims of the present invention.

In the lubrication structure of the third embodiment, the surface on which the leg portion 131 is placed is the lower portion 51B which is a dug surface. However, the example is not limited to this. For example, the leg portion 131 may be placed on the upper surface of the frame 900, and a trench may be formed on the upper surface of the frame 900 to surround the maximum range in which the leg portion 131 moves forward or rearward. In a case of this configuration, the lubricant flowing out from the end of the lubrication portion to the outside spreads to the upper surface of the frame 900. However, the lubricant is collected by the trench formed so as to surround the leg portion 131, and thus, it is possible to prevent the lubricant from flowing to the outside of the trench. In addition, for example, the lubricant flowing into the trench is collected in an oil pan via a collection groove which communicates with the trench. According to the present configuration, compared to third embodiment in which the sliding surface is dug, leveling (leveling out) is easily performed on the sliding surface of the frame. Meanwhile, the third embodiment is preferable to the present configuration because the third embodiment has a large capacity to store the lubricant.

In addition, the leg portion 131 may be placed on the upper surface of the frame 900 and an enclosure member may be provided to surround the maximum range in which the leg portion 131 moves forward or rearward. In a case of this configuration, it is possible to prevent the lubricant from spreading to the outside of the enclosure member. In addition, for example, the lubricant flowing into the enclosure member is collected in an oil pan via a collection groove which communicates with the inside surrounded by the enclosure member. According to the present configuration, the enclosure member is fixed to the frame 900, and thus, compared to the first embodiment, sealing of a gap between the enclosure member and the frame 900 is easily performed.

In addition, in the configuration in which the stationary platen 110 is fixed to the frame 900 and the toggle support 130 is placed on the frame 900, the lubrication of the leg portion 131 of the toggle support 130 and the frame 900 is described. However, the present invention is not limited to this, and the present lubrication structure may be applied to the lubrication of the leg portion of the stationary platen 110 and the frame 900 in a configuration in which the toggle support 130 is fixed to the frame 900 and the stationary platen 110 is placed on the frame 900.

### Brief Description of the Reference Symbols

10: injection molding machine
100: mold clamping unit
110: stationary platen
120: movable platen
140: tie bar
150: toggle mechanism
151: crosshead
130: toggle support
131: leg portion
30, 30A: supply portion
31, 31A: supply path connection port
32, 32A: first supply path
33, 33A: second supply path
34, 34A: supply path opening portion
35, 35A: concave groove portion
40, 40A: lubrication portion
41A: non-lubrication portion
50, 50A, 50B: collection portion
51: gathering portion
52: collection path
53: collection path connection port
51A: collection path opening portion
52A: first collection path
53A: second collection path
54A: collection path connection port
51B: lower portion
52B: collection groove
60: gathering block
61: upper surface-side opening portion
62: lower surface-side opening portion
63: enclosure
64: constriction portion
65, 135A: seal groove
70: seal member
900: frame
901: placement surface

## Claims

1. An injection molding machine (10) comprising:
a stationary platen (110) which is fixed to a frame (900);
a toggle support (130) which is connected to the stationary platen (110) via a tie bar (140) and is placed on the frame (900);
a toggle mechanism (150) which is supported by the toggle support (130);
a supply portion (30) configured to supply a lubricant to a lubrication portion (40) formed between a bottom surface of a leg portion (131) of the toggle support (130) and a placement surface (901) of the frame (900); and
a collection portion (50) configured to collect the lubricant from the lubrication portion (40),
wherein the collection portion (50) is formed in the leg portion (131) or by disposing a gathering block (60) in the leg portion (131), and
a collection path opening portion (51A) formed in the collection portion (50), a supply path opening portion (34, 34A) formed in the supply portion (30), and a concave groove portion (35, 35A) communicating with the opening portions (34, 34A, 51A) are provided on the bottom surface of the leg portion (131).

2. The injection molding machine (10) according to claim 1,
wherein the collection portion (50) has a gathering portion (51) configured to gather the lubricant flowing out from the lubrication portion (40).

3. The injection molding machine (10) according to claim 2, further comprising:
an enclosure (63) which surrounds the lubrication portion (40),
wherein a portion between the leg portion (131) of the toggle support (130) and the enclosure (63) is set to the gathering portion (51).

4. The injection molding machine (10) according to claim 3,
wherein the enclosure (63) is configured to move together with the leg portion (131) when the leg portion (131) moves on the placement surface (901) of the frame (900).

5. The injection molding machine (10) according to claim 3 or 4,
wherein a seal member (70) which seals a portion between a bottom surface of the enclosure (63) and the placement surface (901) of the frame (900) is provided on the bottom surface of the enclosure (63).

6. The injection molding machine (10) according to claim 1,
wherein a seal portion in which a seal member (70) isdisposed and the collection portion (50) are provided on the bottom surface of the leg portion (131).

7. The injection molding machine (10) according to claim 5,
wherein when viewed in a sliding direction of the leg portion (131), the collection path opening portion (51A), the supply path opening portion (34, 34A), and the collection path opening portion (51A) are arranged in this order.

8. An injection molding machine (10) comprising:
a stationary platen (110) which is placed on a frame (900);
a toggle support (130) which is connected to the stationary platen (110) via a tie bar (140) and is fixed to the frame (900) ;
a toggle mechanism (150) which is supported by the toggle support (130);
a supply portion (30) configured to supply a lubricant to a lubrication portion (40) formed between a bottom surface of a leg portion (131) of the stationary platen (110) and a placement surface (901) of the frame (900); and
a collection portion (50) configured to collect the lubricant from the lubrication portion (40),
wherein the collection portion (50) is formed in the leg portion (131) or by disposing a gathering block (60) in the leg portion (131), and
a collection path opening portion (51A) formed in the collection portion (50), a supply path opening portion (34, 34A) formed in the supply portion (30), and a concave groove portion (35, 35A) communicating with the opening portions (34, 34A, 51A) are provided on the bottom surface of the leg portion (131).

## Patentansprüche

1. Spritzgießmaschine (10), umfassend:
eine stationäre Platte (110), die an einem Rahmen (900) fixiert ist;
einen Kniehebelträger (130), der via eine Säule (140) mit der stationären Platte (110) verbunden ist und auf dem Rahmen (900) angeordnet ist;
einen Kniehebelmechanismus (150), der von dem Kniehebelträger (130) gestützt ist;
einen Zufuhrabschnitt (30), der konfiguriert ist, ein Schmiermittel zu einem Schmierabschnitt (40) zuzuführen, der zwischen einer Bodenfläche eines Schenkelabschnitts (131) des Kniehebelträgers (130) und einer Platzierungsfläche (901) des Rahmens (900) gebildet ist; und
einen Sammelabschnitt (50), der konfiguriert ist, das Schmiermittel aus dem Schmierabschnitt (40) zu sammeln,
wobei der Sammelabschnitt (50) in dem Schenkelabschnitt (131) oder durch Anordnen eines Sammelblocks (60) in dem Schenkelabschnitt (131) gebildet ist, und
ein Sammelweg-Öffnungsabschnitt (51A), der in dem Sammelabschnitt (50) gebildet ist, ein Zufuhrweg-Öffnungsabschnitt (34, 34A), der in dem Zufuhrabschnitt (30) gebildet ist, und ein konkaver Nutenabschnitt (35, 35A), der mit den Öffnungsabschnitten (34, 34A, 51A) in Verbindung steht, auf der Bodenfläche des Schenkelabschnitts (131) vorgesehen sind.

2. Spritzgießmaschine (10) nach Anspruch 1,
wobei der Sammelabschnitt (50) einen Sammelabschnitt (51) aufweist, der konfiguriert ist, das aus dem Schmierabschnitt (40) ausströmende Schmiermittel zu sammeln.

3. Spritzgießmaschine (10) nach Anspruch 2, ferner umfassend:
ein Gehäuse (63), das den Schmierungsabschnitt (40) umgibt,
wobei ein Abschnitt zwischen dem Schenkelabschnitt (131) des Kniehebelträgers (130) und dem Gehäuse (63) auf den Sammelabschnitt (51) eingestellt ist.

4. Spritzgießmaschine (10) nach Anspruch 3,
wobei das Gehäuse (63) konfiguriert ist, sich zusammen mit dem Schenkelabschnitt (131) zu bewegen, wenn sich der Schenkelabschnitt (131) auf der Platzierungsfläche (901) des Rahmens (900) bewegt.

5. Spritzgießmaschine (10) nach Anspruch 3 oder 4,
wobei ein Dichtungselement (70), das einen Abschnitt zwischen einer Bodenfläche des Gehäuses (63) und der Platzierungsfläche (901) des Rahmens (900) abdichtet, an der Bodenfläche des Gehäuses (63) vorgesehen ist.

6. Spritzgießmaschine (10) nach Anspruch 1,
wobei ein Dichtungsabschnitt, in dem ein Dichtungselement (70) angeordnet ist, und der Sammelabschnitt (50) an der Bodenfläche des Schenkelabschnitts (131) vorgesehen sind.

7. Spritzgießmaschine (10) nach Anspruch 5,
wobei bei Betrachtung in einer Gleitrichtung des Schenkelabschnitts (131) der Sammelweg-Öffnungsabschnitt (51A), der Zufuhrweg-Öffnungsabschnitt (34, 34A) und der Sammelweg-Öffnungsabschnitt (51A) in dieser Reihenfolge angeordnet sind.

8. Spritzgießmaschine (10), umfassend:
eine stationäre Platte (110), die auf einem Rahmen (900) platziert ist;
einen Kniehebelträger (130), der via eine Säule (140) mit der stationären Platte (110) verbunden ist und an dem Rahmen (900) fixiert ist;
einen Kniehebelmechanismus (150), der von dem Kniehebelträger (130) gestützt wird;
einen Zufuhrabschnitt (30), der konfiguriert ist, ein Schmiermittel zu einem Schmierabschnitt (40) zuzuführen, der zwischen einer Bodenfläche eines Schenkelabschnitts (131) der stationären Platte (110) und einer Platzierungsfläche (901) des Rahmens (900) gebildet ist; und
einen Sammelabschnitt (50), der gebildet ist, das Schmiermittel aus dem Schmierabschnitt (40) zu sammeln,
wobei der Sammelabschnitt (50) in dem Schenkelabschnitt (131) oder durch Anordnen eines Sammelblocks (60) in dem Schenkelabschnitt (131) gebildet ist, und
ein Sammelweg-Öffnungsabschnitt (51A), der in dem Sammelabschnitt (50) gebildet ist, ein Zufuhrweg-Öffnungsabschnitt (34, 34A), der in dem Zufuhrabschnitt (30) gebildet ist, und ein konkaver Nutenabschnitt (35, 35A), der mit den Öffnungsabschnitten (34, 34A, 51A) in Verbindung steht, auf der Bodenfläche des Schenkelabschnitts (131) vorgesehen sind.

## Revendications

1. Machine de moulage par injection (10) comprenant :
un plateau fixe (110) qui est fixé à un bâti (900) ;
un support d'articulation (130) qui est raccordé au plateau fixe (110) via une barre de liaison (140) et est placé sur le bâti (900) ;
un mécanisme à bascule (150) qui est supporté par le support d'articulation (130) ;
une partie d'approvisionnement (30) configurée pour fournir un lubrifiant à une partie de lubrification (40) formée entre une surface inférieure d'une partie de patte (131) du support d'articulation (130) et une surface de mise en place (901) du bâti (900) ; et
une partie de collecte (50) configurée pour collecter le lubrifiant de la partie de lubrification (40),
dans laquelle la partie de collecte (50) est formée dans la partie de patte (131) et en disposant un bloc de rassemblement (60) dans la partie de patte (131), et
une partie d'ouverture de trajectoire de collecte (51A) formée dans la partie de collecte (50), une partie d'ouverture de trajectoire d'approvisionnement (34, 34A) formée dans la partie d'approvisionnement (30) et une partie de rainure concave (35, 35A) communiquant avec les parties d'ouverture (34, 34A, 51A) sont prévues sur la surface inférieure de la partie de patte (131).

2. La machine de moulage par injection (10) selon la revendication 1,
dans laquelle la partie de collecte (50) a une partie de rassemblement (51) configurée pour rassembler le lubrifiant s'écoulant de la partie de lubrification (40).

3. La machine de moulage par injection (10) selon la revendication 2, comprenant en outre :
une enceinte (63) qui entoure la partie de lubrification (40),
dans laquelle une partie entre la partie de patte (131) du support d'articulation (130) et l'enceinte (63) est placée sur la partie de rassemblement (51).

4. La machine de moulage par injection (10) selon la revendication 3,
dans laquelle l'enceinte (63) est configurée pour se déplacer conjointement avec la partie de patte (131) lorsque la partie de patte (131) se déplace sur la surface de mise en place (901) du bâti (900).

5. La machine de moulage par injection (10) selon la revendication 3 ou 4,
dans laquelle un élément de joint d'étanchéité (70) qui scelle une partie entre une surface inférieure de l'enceinte (63) et la surface de mise en place (901) du bâti (900) est prévu sur la surface inférieure de l'enceinte (63).

6. La machine de moulage par injection (10) selon la revendication 1,
dans laquelle une partie de joint d'étanchéité dans laquelle un élément de joint d'étanchéité (70) est disposé et la partie de collecte (50) sont prévues sur la surface inférieure de la partie de patte (131).

7. La machine de moulage par injection (10) selon la revendication 5,
dans laquelle lorsqu'elles sont observées dans une direction de coulissement de la partie de patte (131), la partie d'ouverture de trajectoire de collecte (51A), la partie d'ouverture de trajectoire d'approvisionnement (34, 34A) et la partie d'ouverture de trajectoire de collecte (51a) sont agencées dans cet ordre.

8. Une machine de moulage par injection (10) comprenant :
un plateau fixe (110) qui est placé sur le bâti (900) ;
un support d'articulation (130) qui est raccordé au plateau fixe (110) via une barre de liaison (140) et est fixé sur le bâti (900) ;
un mécanisme à bascule (150) qui est supporté par le support d'articulation (130) ;
une partie d'approvisionnement (30) configurée pour fournir un lubrifiant à une partie de lubrification (40) formée entre une surface inférieure d'une partie de patte (131) du plateau fixe (110) et une surface de mise en place (901) du bâti (900) ; et
une partie de collecte (50) configurée pour collecter le lubrifiant de la partie de lubrification (40),
dans laquelle la partie de lubrification (50) est formée dans la partie de patte (131) ou en disposant un bloc de rassemblement (60) dans la partie de patte (131), et
une partie d'ouverture de trajectoire de collecte (51A) formée dans la partie de collecte (50), une partie d'ouverture de trajectoire d'approvisionnement (34, 34A) formée dans la partie d'approvisionnement (30) et une partie de rainure concave (35, 35A) communiquant avec les parties d'ouverture (34, 34A, 51A) sont prévues sur la surface inférieure de la partie de patte (131).
